# EUROPEAN PATENT APPLICATION

(11) **EP 3 263 928 A1**
(43) Date of publication of application: **03.01.2018**
(21) Application number: 16755737.0
(22) Date of filing: 26.02.2016
(51) Int. Cl.: F16C 33/08, F16C 9/02, F16C 17/02, F16C 33/10

(54) **SLIDING BEARING**

(30) Priority: 27.02.2015 JP 2015039113
(71) Applicant: TAIHO KOGYO Co., Ltd., Toyota-shi, Aichi 471-8502 (JP)
(72) Inventor: SEKI, Daisuke, Toyota-shi, Aichi 471-8502 (JP); TAKAGI, Yuji, Toyota-shi, Aichi 471-8502 (JP)
(74) Representative: Kuhnen & Wacker
(86) International application number: PCT/JP2016/055948
(87) International publication number: WO 2016/136993

(57) **Abstract**

Provided is a sliding bearing capable of achieving a friction reduction effect and limiting a total outflow oil amount. This sliding bearing (1) has vertically disposed halved members (2)▪ (2) which are formed by halving a cylinder in the direction parallel to the axial direction of the cylinder, wherein narrow grooves (3) are provided on an axial end of the lower halved member (2) in a circumferential direction on the downstream side in the rotation direction; peripheral sections (2a) are formed outward from the narrow grooves (3) in the axial direction so as to be lower than a contact surface between the sliding bearing (1) and a crankshaft (11); and, when viewed in a cross-section perpendicular to the longitudinal direction of the peripheral section (2a), a chamfered section (2b) is formed at an outer edge section in the axial direction of the peripheral section (2a).

## Description

### Technical Field

The present invention relates to a technique of a sliding bearing, and to a technique of a sliding bearing including vertically disposed halved members which are formed by halving a cylinder in a direction parallel to an axial direction of the cylinder.

### Background Art

Conventionally known sliding bearings, for supporting a crankshaft of an engine, having a halved structure in which two members obtained by halving a cylindrical member are combined are plagued by a large friction due to high viscosity of oil during a cold engine operation. Thus, one known bearing has relief portions (narrow grooves) formed in both ends of the bearing in an axial direction (for example, see Patent Literature 1).

### Citation List

### Patent Literature

PTL 1: Japanese Translation of PCT International Application Publication No. JP-T-2003-532036

### Summary of Invention

### Technical Problem

Such a conventional bearing in which the narrow grooves are formed fails to achieve both a larger quantity of lead-in oil and a smaller quantity of outflow oil flowing through both ends in the axial direction. Thus, a further friction reduction effect has been unable to be expected.

Thus, the present invention is made in view of the problem described above, and provides a sliding bearing that can limit a total outflow oil amount as well as achieving a further friction reduction effect.

### Solution to Problem

The problem of the present invention is as described above. Next, a solution to the problem is described.

The present invention is a sliding bearing including vertically disposed halved members which are formed by halving a cylinder in a direction parallel to an axial direction of the cylinder, wherein narrow grooves are provided on an axial end of the lower halved member in a circumferential direction on a downstream side in a rotation direction, peripheral sections are formed outward from the narrow grooves in the axial direction so as to be lower than a contact surface between the sliding bearing and a shaft, and,
when viewed in a cross-section perpendicular to the longitudinal direction of the peripheral section, a chamfered section is formed at an outer edge section in the axial direction of the peripheral section.

In the present invention, the chamfered section is formed to have an inclination angle that is not larger than 60°.

### Advantageous Effects of Invention

The present invention provides the following advantageous effects.

The narrow groove is provided without hindering generation of oil film pressure, whereby a friction reduction effect can be achieved with a smaller sliding area and the total outflow oil amount can be limited with oil leaked from an inner surface of the bearing recirculated. With the chamfered section formed in the peripheral section, the lubricant oil is smoothly drawn in, whereby the amount of lead-in oil is increased. Thus, a friction reduction effect can be achieved and the total outflow oil amount can be limited.

### Brief Description of Drawings

[Fig. 1] Fig. 1 is a front view of a sliding bearing according to an embodiment of the present invention.
[Fig. 2] Fig. 2(A) is a plan view of a halved member as part of the sliding bearing according to the embodiment of the present invention, Fig. 2(B) is a cross-sectional view of the same taken along line II(B)-II(B), and Fig. 2(C) is a cross-sectional view of the same taken along line II(C)-II(C).
[Fig. 3] Fig. 3 is a cross-sectional view of the halved member according to the embodiment of the present invention taken along line II(C)-II(C) illustrating a flow of lubricant oil. Description of Embodiments

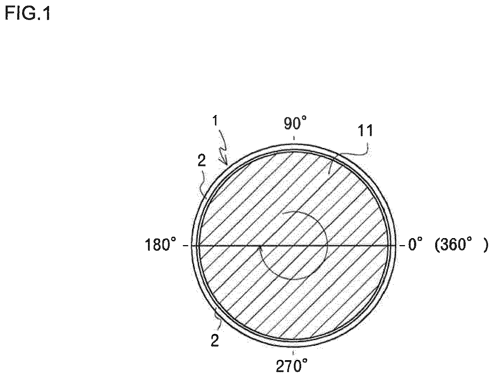

An embodiment of the invention is described below. Fig. 1 is a front view of a sliding bearing 1, with a vertical direction of the sheet defined as an upper and lower direction, and a direction between a closer side and a farther side of the sheet defined as an axial direction (front and rear direction).

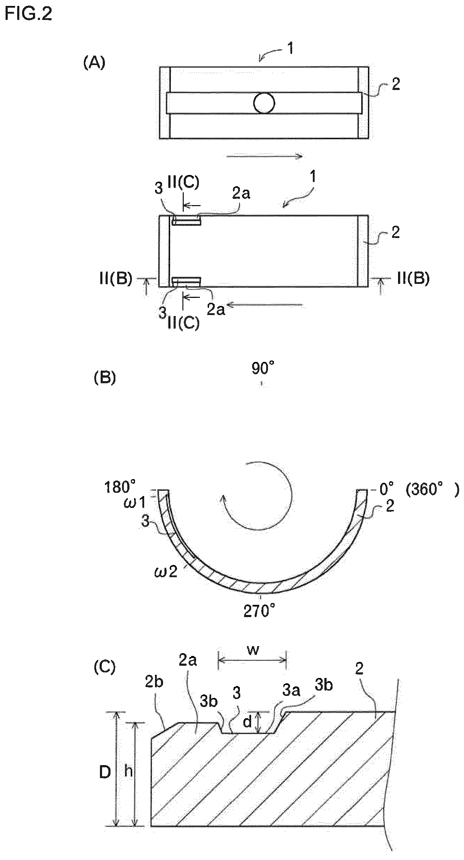

First of all, halved members 2 as parts of the sliding bearing 1 according to an embodiment of the present invention are described with reference to Fig.1 and Fig. 2.

The sliding bearing 1 is a cylindrical member, and is applied to a sliding bearing structure of a crankshaft 11 of an engine as illustrated in Fig. 1. The sliding bearing 1 includes two halved members 2 and 2. The two halved members 2 and 2 have shapes formed by halving a cylinder in a direction parallel to the axial direction of the cylinder, and each have a semicircular cross-sectional shape. In the present embodiment, the halved members 2 and 2 are arranged in the upper and lower direction with joining surfaces provided on left and right sides. When the sliding bearing 1 is supporting the crankshaft 11, a predetermined gap is formed, and lubricant oil is supplied into the gap through an unillustrated oil path.

Fig. 2(A) illustrates the halved members 2 on the upper and the lower sides. In the present embodiment, a rotation direction of the crankshaft 11 corresponds to the clockwise direction in front view as indicated by an arrow in Fig. 1. A bearing angle ω is 0° at a right end position in Fig. 2(B), and increases along the counterclockwise direction in Fig. 2(B). More specifically, the bearing angle ω in Fig. 2(B) is defined as 180° at a left end position, and as 270° at a lower end position.

The halved member 2 on the upper side has an inner circumference provided with a groove in a circumferential direction that has a round hole at the center, and has the joining surfaces on the left and the right sides.

The lower halved member 2 has an inner circumference with ends in the axial direction provided with narrow grooves 3.

A peripheral section 2a is formed on a surface on the outer side of each of the narrow grooves 3 in the axial direction, and is formed to have a height h from an outer circumference surface of the halved member 2 that is shorter than a height D of a contact surface from the outer circumference surface of the halved member 2. Thus, the peripheral section 2a formed outward in the axial direction is formed to be one step lower than the contact surface, adjacent to the peripheral section 2a, to be in contact with the crankshaft 11.

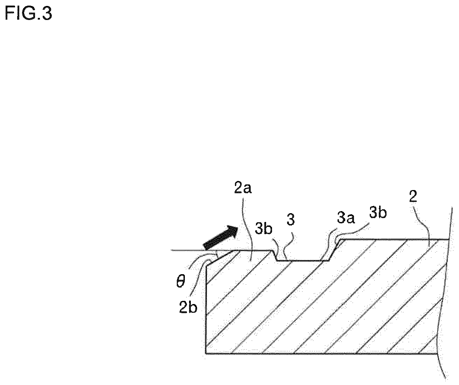

When viewed in a cross-section taken along line II(C)-II(C), a chamfered section 2b is formed at an outer edge section in the axial direction on an inner circumferential surface of the peripheral section 2a. The chamfered section 2b is formed to incline in such a manner as to be closer to the inner circumference surface toward inner side from the outer side in the axial direction. With such a configuration, as indicated by an arrow in Fig. 3, a large opening area can be achieved in an end portion on the outer side in the axial direction and a larger amount of lubricant oil can be led in from the end portion on the outer side in the axial direction.

The chamfered section 2b is formed to have an inclination angle θ (see Fig. 3) that is not smaller than 0° and not larger than 60°. The inclination angle θ herein means an angle from the inner circumferential surface of the peripheral section 2a to an inclined surface of the chamfered section 2b when viewed in the cross-section taken along line II(C)-II(C). The chamfered section 2b is formed to have an end portion in the inner side in the axial direction disposed more on the outer side than an end portion of the narrow groove 3 in the axial direction, in the axial direction. Thus, the chamfered section 2b may be formed over the entire surface of the peripheral section 2a.

The narrow groove 3 is described with reference to Fig. 2(B) and Fig. 2(C).

The narrow grooves 3 are provided on the lower halved member 2. In the present embodiment, two narrow grooves 3 are arranged in parallel in the axial direction. More specifically, the narrow groove 3 extends along the circumferential direction to a bearing angle ω2 in a direction in which the bearing angle ω increases (counterclockwise direction) from a position (with the bearing angle ω of col) separated from the joining surface (with the bearing angle ω of 180°) on a downstream side in a rotation direction of the crankshaft 11. The lower halved member 2 has a joining surface on the right side in Fig. 2(B) as a joining surface on an upstream side in the rotation direction, and a joining surface on the left side in Fig. 2(B) as the joining surface on the downstream side in the rotation direction.

The narrow groove 3 is formed to have a width w as illustrated in Fig. 2(C).

The narrow groove 3 is also formed to have a depth d shorter than the height D of the contact surface from the outer circumference surface of the halved member 2.

With the peripheral section 2a formed one step above a bottom surface 3a of the narrow groove 3, a wall for preventing oil from leaking from a sliding surface to the axial end and preventing lead-in oil from leaking again can be provided, whereby an outflow oil amount can be reduced. Thus, the quantity of the lead-in oil can be increased during a cold engine operation, and a higher friction reduction effect can be achieved with quick heating. The narrow groove 3 has side surfaces 3b and 3b inclined in such a manner that the width w of the narrow groove 3 decreases toward the outer circumference side.

The peripheral section 2a is formed to be one step below the contact surface adjacent to the peripheral section 2a. Thus, a larger gap is achieved in the end portion of the sliding bearing 1 in the axial direction. Thus, the amount of lead-in oil is increased and the total outflow oil amount is reduced.

With the narrow grooves 3 according to the present embodiment, a smaller FMEP is achieved. An especially smaller FMEP is achieved in a region with a low engine speed. The FMEP is a value indicating friction characteristics. Smaller FMEP leads to a lower friction. For example, at the timing of engine cold start, FMEP is reduced and the friction is reduced.

As described above, the sliding bearing 1 includes vertically disposed halved members 2 and 2 which are formed by halving a cylinder in a direction parallel to an axial direction of the cylinder, wherein narrow grooves 3 are provided on an axial end of the lower halved member 2 in a circumferential direction on a downstream side in a rotation direction; peripheral sections 2a are formed outward from the narrow grooves 3 in the axial direction so as to be lower than a contact surface between the sliding bearing 1 and a crankshaft 11; and, when viewed in a cross-section perpendicular to the longitudinal direction of the peripheral section 2a, a chamfered section 2b is formed at an outer edge section in the axial direction of the peripheral section 2a.

With this configuration, the narrow groove 3 is provided without hindering generation of oil film pressure, whereby a friction reduction effect can be achieved with a smaller sliding area and the total outflow oil amount can be limited. The chamfered section 2b is provided to the peripheral section 2a, whereby the amount of lead-in oil can be increased. Thus, a friction reduction effect can be achieved and the total outflow oil amount can be limited.

In the present invention, the chamfered section 2b is formed to have an inclination angle θ that is not larger than 60°, from the inner circumference surface of the peripheral section 2a.

With this configuration, the amount of lead-in oil is increased with the amount of oil leaking through the chamfered section 2b reduced. Thus, the friction reduction effect can be achieved and the total outflow oil amount can be limited.

### Industrial Applicability

The present invention can be applied to a technique for a sliding bearing, and can be applied to a sliding bearing including vertically disposed halved members which are formed by halving a cylinder in a direction parallel to an axial direction of the cylinder.

### Reference Signs List

1 Sliding bearing
2 Halved member
2a Peripheral section
2b Chamfered section
3 Narrow groove
11 Crankshaft

## Claims

1. A sliding bearing comprising vertically disposed halved members which are formed by halving a cylinder in a direction parallel to an axial direction of the cylinder, wherein narrow grooves are provided on an axial end of the lower halved member in a circumferential direction on a downstream side in a rotation direction, peripheral sections are formed outward from the narrow grooves in the axial direction so as to be lower than a contact surface between the sliding bearing and a shaft, and,
when viewed in a cross-section perpendicular to the longitudinal direction of the peripheral section, a chamfered section is formed at an outer edge section in the axial direction of the peripheral section.

2. The sliding bearing according to claim 1, wherein the chamfered section is formed to have an inclination angle that is not larger than 60°.
